# EUROPEAN PATENT APPLICATION

(11) **EP 4 763 723 A1**
(43) Date of publication of application: **24.06.2026**
(21) Application number: 24856581.4
(22) Date of filing: 26.04.2024
(51) Int. Cl.: B65B 55/02, A23B 2/20, A23B 2/00

(54) **CART FIXING APPARATUS AND CART TREATMENT MODULE INCLUDING SAME**

(30) Priority: 21.08.2023 KR 20230109023
(71) Applicant: CJ Cheiljedang Corporation, Seoul 04560 (KR)
(72) Inventor: CHOI, Chun Myung, Seoul 04560 (KR); LEE, Seung Hoon, Seoul 04560 (KR); LEE, Seung Ho, Seoul 04560 (KR)
(74) Representative: Meissner Bolte Partnerschaft mbB
(86) International application number: PCT/KR2024/005697
(87) International publication number: WO 2025/041961

(57) **Abstract**

Provided are a carriage fixing apparatus and a carriage handling module. The carriage fixing apparatus may include a fixing member that is moved between a fixing position for fixing a carriage and a releasing position for being spaced apart from the carriage, and a link assembly coupled to the fixing member to be pressed by a guide pusher to lift the fixing member at the fixing position to the releasing position in one direction.

## Description

### [Technical Field]

### CROSS-REFERENCE TO RELATED APPLICATION

This application claims priority to Korean Patent Application No. 10-2023-0109023, filed on August 21, 2023, and all contents disclosed in the specification and drawings of the above application are incorporated herein by reference.

### [Technical Field]

The present disclosure relates to a carriage fixing apparatus capable of fixing a carriage during processing of the carriage, particularly when products loaded on the carriage are processed by a method, such as sterilization, and a carriage handling module including the same.

### [Background Art]

Retort food refers to food that is formed by a method, in which a sealed food product is sterilized by applying high-temperature heat and is then rapidly cooled. A retort sterilizer is a device that performs an operation of applying high-temperature heat to a sealed product during a manufacturing process of the retort food.

To uniformly and effectively sterilize products and process a large number of products in a short time to increase product production efficiency, various methods have been applied.

A batch method, in which products are loaded on a carriage and are introduced into a sterilizer so that all processing operations including sterilization are performed at once, may be used. In this case, thermal efficiency is low, so that additional heat treatment time is required, and a deviation in heat distribution occurs, so that uniform heating is not achieved.

A continuous method, in which products are continuously transferred and each product is processed one by one in a separate space, may be used. In this case, a length of an entire apparatus becomes excessively long, and entry of an operator becomes difficult due to a complex structure, so that maintenance and repair are difficult.

In addition, systems that have emerged to compensate for disadvantages of the continuous method and the batch method have existed, but, for safety, an entire system for sterilization needs to be designed in accordance with a pressure vessel. In particular, in some countries, an entire system for sterilization is treated in the same manner as a pressure vessel, and distribution is allowed only when the system satisfies design conditions equivalent to those of a pressure vessel. Therefore, even when disadvantages of the continuous method and the batch method are compensated for, modification of the system needs to be performed within a structure, in which airtightness between respective components may be sufficiently maintained, so that design conditions equivalent to those of a pressure vessel may be satisfied.

In addition, a module for sterilizing a carriage may require a device for fixing the carriage, and a need to prevent interference between the device for fixing the carriage and other components in a module, in which the carriage is rotated and processed has arisen.

### [Disclosure]

### [Technical Problem]

An aspect of the present disclosure provides a carriage fixing apparatus, in which interference with other rotating components does not occur, and a carriage handling module including the same.

### [Technical Solution]

According to an aspect of the present disclosure, a carriage fixing apparatus includes a fixing member that is moved between a fixing position for fixing a carriage and a releasing position for being spaced apart from the carriage, and a link assembly coupled to the fixing member to be pressed by a guide pusher to lift the fixing member at the fixing position to the releasing position in a direction.

The link assembly may include a horizontal link member that is pressed by the guide pusher, a lift member coupled to the fixing member and extending in the direction, and a rotation link member rotated by the horizontal link member and connecting the lift member and the link member to lift the lift member.

The link assembly may further include a fixing bracket, to which the rotation link member is rotatably coupled by fixing a point between a one-side part coupled to the horizontal link member and an opposite-side part coupled to the lift member.

The link assembly may include a support frame having a support part spaced apart from the fixing member in the direction, and a coupling member extending from the fixing member in the direction and coupled to the support part and the fixing member.

The coupling member may include a flange part disposed on an upper surface of the fixing member to push out the fixing member, and a cylinder part extending from the flange part in the direction, and the link assembly may further include an elastic member provided between the flange part and the support part along the cylinder part to move the fixing member from the releasing position to the fixing position.

The fixing member may include a fixing hole for coupling to the carriage.

The link assembly may further include a support frame that supports the fixing member and coupled to the fixing bracket.

According to an aspect of the present disclosure, a carriage handling module includes a rotation frame including a body having a chamber, through which a carriage passes along a first direction, and a wheel part disposed along a circumference of the body when viewed along the first direction, a wheel rotation part engaged with the wheel part to rotate the wheel part, a guide pusher that is moved in a second direction perpendicular to the first direction, and a carriage fixing apparatus including a fixing member that fixes the carriage between the fixing member and the rotation frame in the chamber and that is moved in a third direction opposite to the second direction by the guide pusher, and mounted on the rotation frame.

The fixing member may be moved between the fixing position for fixing the carriage and a releasing position for being spaced apart from the carriage.

The carriage fixing apparatus may further include a link assembly including a horizontal link member that is pressed by the guide pusher, a lift member coupled to the fixing member and extending in the third direction, and a rotation link member rotated by the horizontal link member and connecting the lift member and the link member to lift the lift member in the third direction.

The horizontal link member may include an upper surface, and a first inclined surface and a second inclined surface defining a pusher groove for insertion of the guide pusher and configured to become closer as they go from the upper surface toward the second direction.

The guide pusher may include a pressing surface configured to correspond to the first inclined surface and the second inclined surface to press the first inclined surface and the second inclined surface.

The carriage fixing apparatus may further include a support frame supported by the support member extending in the first direction to be coupled to the rotation frame and that supports the fixing member.

The support frame may include a gripper that grips the support member.

The carriage handling module may further include a push rod connected to the guide pusher, and an actuator connected to the push rod to move the push rod in the second direction or in the third direction.

### [Advantageous Effects]

According to an embodiment of the present disclosure, the carriage may be rotated in a state, in which interference with other components does not occur, while the rotation frame is rotated, so that durability and usability of the carriage handling module may be improved.

According to an embodiment of the present disclosure, by a structure of the carriage fixing apparatus that is moved between the fixing position and the releasing position without separate driving power other than the guide pusher, fixing and releasing of the carriage may be smoothly performed, and a processing speed of the carriage may be increased.

### [Description of Drawings]

FIG. 1 is a perspective view of a carriage handling system according to an embodiment of the present disclosure.
FIG. 2 is a perspective view illustrating a state, in which a pre-processing door of the carriage handling system of FIG. 1 deviates from a system inlet so that the system inlet is opened.
FIG. 3 is a perspective view illustrating a state, in which an intermediate module of the carriage handling system according to an embodiment of the present disclosure is separated from a pre-processing module and a post-processing module.
FIG. 4 is a perspective view illustrating a carriage handling module, from which a module housing is removed, and a carriage, according to an embodiment of the present disclosure.
FIG. 5 is a view illustrating a carriage handling module, from which a rotation housing is removed, according to an embodiment of the present disclosure, when viewed from a front side.
FIG. 6 is a perspective view illustrating a support unit according to an embodiment of the present disclosure.
FIG. 7 is a view illustrating a rotation frame and a wheel rotation part according to an embodiment of the present disclosure.
FIG. 8 is a view illustrating, in detail, a state, in which a rotation frame and a wheel rotation part are engaged with each other according to an embodiment of the present disclosure.
FIG. 9 is a perspective view illustrating a situation, in which a carriage is rotated while being fixed by a carriage fixing apparatus according to an embodiment of the present disclosure.
FIG. 10 is a perspective view illustrating a carriage fixing apparatus according to an embodiment of the present disclosure.
FIG. 11 is an exploded perspective view illustrating a carriage fixing apparatus according to an embodiment of the present disclosure.
FIG. 12 is a front view illustrating a carriage fixing apparatus according to an embodiment of the present disclosure.
FIG. 13 is a side view illustrating a carriage fixing apparatus according to an embodiment of the present disclosure.
FIG. 14 is a schematic view of a state, in which a guide pusher assembly according to an embodiment of the present disclosure is mounted on a main housing.
FIG. 15 is a schematic view of a state, in which a carriage is fixed when a fixing member of a carriage fixing apparatus according to an embodiment of the present disclosure is at a fixing position.
FIG. 16 is a schematic view of a carriage fixing apparatus that is spaced apart from a carriage when a fixing member of the carriage fixing apparatus according to an embodiment of the present disclosure is at a releasing position.
FIG. 17 is a schematic view illustrating a state, in which a carriage is moved when a fixing member of a carriage fixing apparatus according to an embodiment of the present disclosure is at a releasing position.

### [Mode for Invention]

Hereinafter, some embodiments of the present disclosure will be described in detail with reference to the accompanying drawings. In the drawings, the same reference numerals will be used throughout to designate the same or equivalent components. In describing embodiments of the present disclosure, detailed descriptions associated with well-known functions or configurations will be omitted if they may make subject matters of the present disclosure unnecessarily obscure.

In the specification, a forward/rearward direction, a leftward/rightward direction, and an upward/downward direction are referred for convenience, and may be directions that are perpendicular to each other. In the specification, a horizontal direction and a vertical direction are referred for convenience, and may be directions that are perpendicular to each other. However, the directions are determined relatively to a direction, in which the components of a carriage handling system are arranged, and the upward/downward direction necessarily mean a vertical direction.

Additionally, terms including ordinal numbers, such as "first," "second," etc., used herein may be used to describe various components, but the components are not limited by the terms, and the terms are used only for the purpose of distinguishing one component from another. For example, without departing from the scope and spirit of the present disclosure, a first component may be referred to as a second component, and similarly, the second component may be referred to as the first component. The term "and/or" includes any combination of a plurality of related listed items or any one of the plurality of related listed items.

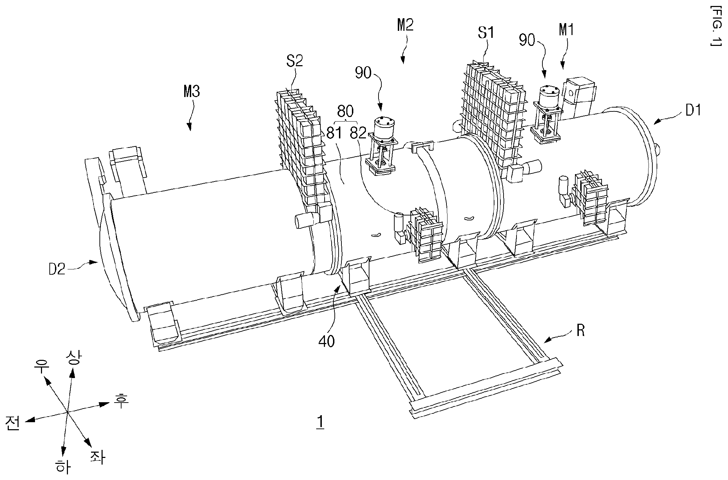

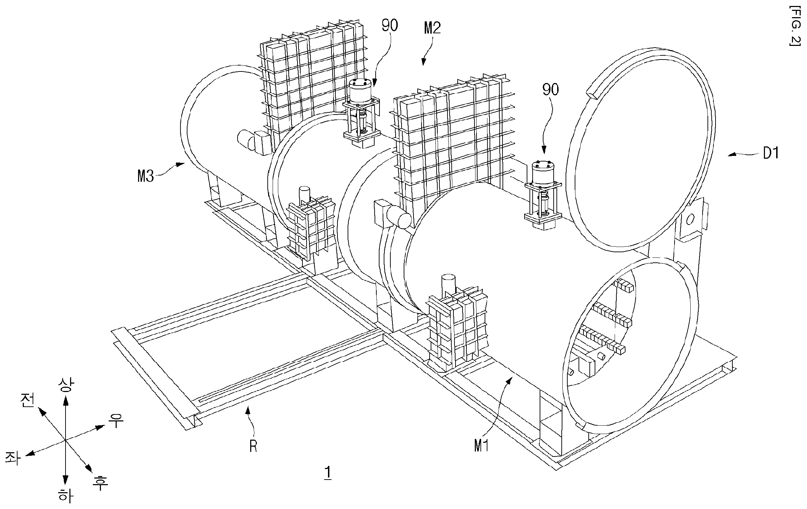

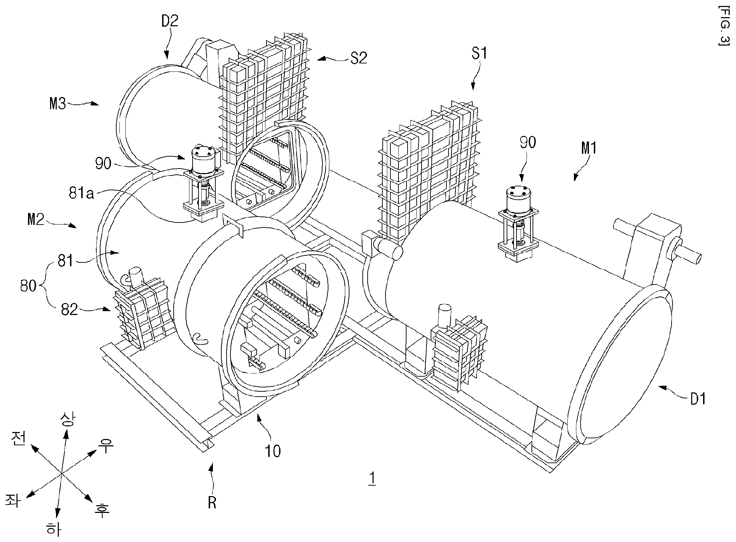

FIG. 1 is a perspective view of a carriage handling system 1 according to an embodiment of the present disclosure. FIG. 2 is a perspective view illustrating a state, in which a pre-processing door D1 of the carriage handling system 1 of FIG. 1 deviates from a system inlet so that the system inlet is opened. FIG. 3 is a perspective view illustrating a state, in which an intermediate module M2 of a carriage handling system 1 according to an embodiment of the present disclosure is separated from a pre-processing module M1 and a post-processing module M3.

Referring to FIGS. 1 to 3, the carriage handling system 1 according to an embodiment of the present disclosure may include the pre-processing module M1, the intermediate module M2, and the post-processing module M3. The intermediate module M2 is configured to receive and process a carriage C that has been processed in the pre-processing module M1. The post-processing module M3 is configured to receive and process a carriage C that has been processed in the intermediate module M2. Each module is a module that processes a product loaded on the carriage C, for example, through a heat treatment, and thus, may be referred to as a carriage handling module. Accordingly, the pre-processing module M1, the intermediate module M2, and the post-processing module M3 may be referred to as carriage handling modules. However, the processing of the carriage C and products loaded on the carriage C by each carriage handling module may not be limited to a heat treatment.

In the specification, a leftward direction, a rightward direction, and an upward/downward direction mean directions that are perpendicular to a forward/rearward direction. The directions are used for convenience of description, and may be relative depending on an arrangement direction and an orientation of the carriage handling system 1. Furthermore, hereinafter, the carriage handling module will be described by using the intermediate module M2, and a description of the carriage handling module may also be applied to the pre-processing module M1 and the post-processing module M3.

The modules that constitute the carriage handling system 1 of the present disclosure may be arranged along the forward/rearward direction. The pre-processing module M1, the intermediate module M2, and the post-processing module M3 may be arranged sequentially in a forward direction. The carriage C may move along a forward direction within the carriage handling system 1. A carriage C processed in the pre-processing module M1 may be moved forward to be transferred to the intermediate module M2 to be processed, and a carriage C processed in the intermediate module M2 may be moved forward to be transferred to the post-processing module M3 to be processed.

The modules may be separated from or coupled to each other. The intermediate module M2 may be configured to be positioned in any one of a coupling state, in which it is coupled to the pre-processing module M1 and the post-processing module M3, and a separation state, in which it is separated from the pre-processing module M1 and the post-processing module M3. When the intermediate module M2 is transitioned from the coupling state to the separation state, it may deviate from the pre-processing module M1 and the post-processing module M3 along a direction that crosses the forward/rearward direction. Conversely, when the intermediate module M2 is transitioned from the separation state to the coupling state, it may approach the pre-processing module M1 and the post-processing module M3 along a direction that crosses the forward/rearward direction. In an embodiment of the present disclosure, a direction, in which the intermediate module M2 deviates from the pre-processing module M1 and the post-processing module M3 when the intermediate module M2 is transitioned to the separation state, is referred to as a leftward direction, and a direction, in which the intermediate module M2 moves when the intermediate module M2 is transitioned to the coupling state, is referred to as a rightward direction, but the directions are not limited thereto.

The carriage handling system 1 according to an embodiment of the present disclosure may include a module moving apparatus. The module moving apparatus is coupled to the intermediate module M2 to move the intermediate module M2 such that the intermediate module M2 is in any one of a coupling state and a separation state. The module moving apparatus may include a movement rail R, to which the intermediate module M2 is slidably coupled. The movement rail R may extend along a leftward/rightward direction and may be disposed on the ground. The intermediate module M2 may include a support part 40 that extends downward from an intermediate body 11 to be slid along the movement rail R, and the support part 40 may be slidably coupled to the movement rail R. The module moving apparatus may include a fixed rail that is coupled to other modules so that the other modules are disposed at specific positions and that extends along the forward/rearward direction. The movement rail R may be disposed to cross the fixed rail. The pre-processing module M1 and the post-processing module M3 may also have a support part 40 similar to the intermediate module M2, and a lower end of the support part 40 may be coupled to the fixed rail or positioned on the ground to support the pre-processing module M1 and the post-processing module M3, respectively.

A towing ring, to which a winch or a hoist may be hooked, may be formed on an outer surface of the intermediate body 11. When a winch or a hoist is hooked to the towing ring and pulled along a leftward/rightward direction, the intermediate module M2 may be moved along the movement rail R to be separated from or coupled to the pre-processing module M1 and the post-processing module M3.

In addition, the module moving apparatus may include a power source that drives an intermediate roller, so that the intermediate module M2 may move leftward and rightward along the movement rail R.

As described above, each carriage handling module may be selectively separated from or coupled to form an integrated system that enables step-by-step processing of a carriage C moving along a forward direction, whereby maintenance and repair of the carriage handling system 1 may be facilitated, and, when major maintenance is required, a necessary carriage handling module may be separated for replacement or repair.

Furthermore, even when a failure of equipment occurs in a specific carriage handling module and causes an abnormality in a product, a problem occurs only in the corresponding carriage handling module and the product located in the corresponding carriage handling module, so that a disposal amount of products may be minimized.

A system inlet that is opened along the forward/rearward direction may be formed at a rear end of a pre-processing body 11 of the pre-processing module M1. A carriage C may be moved forward through the system inlet to enter an interior of the carriage handling system 1 from an outside. The carriage handling system 1 according to an embodiment of the present disclosure may include a pre-processing door D1. The pre-processing door D1 is a device that opens or closes the system inlet as the pre-processing door D1 is moved.

A system outlet that is opened along the forward/rearward direction may be formed at a front end of a post-processing body 11 of the post-processing module M3. The carriage C may be moved forward through the system outlet to be discharged from the interior of the carriage handling system 1 to the outside. The carriage handling system 1 according to an embodiment of the present disclosure may include a post-processing door D2. The post-processing door D2 is a device that opens or closes the system outlet as the post-processing door D2 is moved.

Due to the pre-processing door D1 and the post-processing door D2, the carriage handling system 1 may define an interior space that is closed overall, and the interior space may be distinguished from the outside by the pre-processing door D1, the post-processing door D2, and the modules.

The carriage handling module may include a module housing 80. The module housing 80 may be defined as surrounding a pre-processing space that is an interior space, through which the carriage C passes to be processed. A rotation frame 10, a wheel rotation part 20, and a driving part 30, which will be described later, may be located in the pre-processing space. That is, the above components may be embedded in the module housing 80. The module housing 80 may physically separate a space located therein from an outside space. The module housing 80 may be formed in a cylindrical shape that is opened along the forward/rearward direction, but a shape thereof is not limited thereto.

The module housing 80 may include a main housing 81 and a rotation housing 82. The rotation frame 10 may be located in the main housing 81, and the wheel rotation part 20 and the driving part 30 may be located in the rotation housing 82. The rotation housing 82 may have a shape that protrudes from a cylindrical portion of the main housing 81.

The carriage handling module may include a thermal medium providing part (not illustrated) that is formed toward an interior of the carriage handling module for a heat treatment of the carriage C. The thermal medium may be steam, hot water, or a refrigerant, such as steam, hot water, or a refrigerant, and the thermal medium providing part may include a pump and a nozzle for pumping the thermal medium. The thermal medium providing part may be located in an interior of the main housing 81. The thermal medium providing part may be coupled to and fixed to an inner surface of the main housing 81. Accordingly, the thermal medium providing part may provide the thermal medium not only to the carriage C, but also to the rotation frame 10.

A plurality of nozzles included in the thermal medium providing part are conceptually illustrated as being disposed to be spaced apart from each other along the forward/rearward direction above the rotation frame 10, and as spraying the thermal medium toward an interior of the rotation frame 10, in which the carriage C may be located, however, in addition thereto, the nozzles may be disposed to surround the rotation frame 10 from various directions, ,such as upper and lower sides and left and right sides, when viewed along the forward/rearward direction, while being spaced apart from the rotation frame 10. The nozzle may be a spray nozzle that is capable of spraying a fluid, may be a pin-hole-type nozzle, in which holes are formed in a cylinder to allow the fluid to flow therethrough, or may be a nozzle that is capable of strongly jetting the fluid, however, a type of the nozzle is not limited thereto.

The carriage handling module may further include another medium providing device that provides a disinfectant in a sprayed form for a disinfection treatment, or provides a detergent or washing water in a sprayed form for an internal cleaning.

The carriage handling module may include a guide pusher assembly 90. The guide pusher assembly 90 may be disposed on an upper side of the main housing 81 of the intermediate module M2 and the main housing 81 of the pre-processing module M1. Alternatively, the guide pusher assembly 90 may be mounted only on an upper side of the intermediate module M2.

More specifically, the guide pusher assembly 90 may be mounted on the main housing 81 through the pusher introduction part 81a of the main housing 81. The pusher introduction part 81a may be coupled to the main housing 81 by welding. As will be described later, the pusher introduction part 81a may define a pusher space, through which a guide pusher 93 of the guide pusher assembly 90 is moved between an inside and an outside of the main housing 81. With this structure, an interior of the main housing 81 and an exterior of the main housing 81 may be separated from each other, so that airtightness of the interior of the main housing 81 may be maintained.

A carriage handling system 1 according to an embodiment of the present disclosure may include a pre-processing shutter S1 and a post-processing shutter S2. The pre-processing shutter S1 selectively divides an interior space of the pre-processing body 11 along the forward/rearward direction. The post-processing shutter S2 selectively divides an interior space of the post-processing body 11 along the forward/rearward direction.

The pre-processing shutter S1 and the post-processing shutter S2 may include a plate-shaped shielding part, and a shutter housing having a pre-processing opening or a post-processing opening that is opened and closed by the shielding part. When the pre-processing opening or the post-processing opening is opened, the shielding part may be located in an interior of the shutter housing. A portion, at which the shielding part is located when the opening is opened, may be an upper portion of the shutter housing.

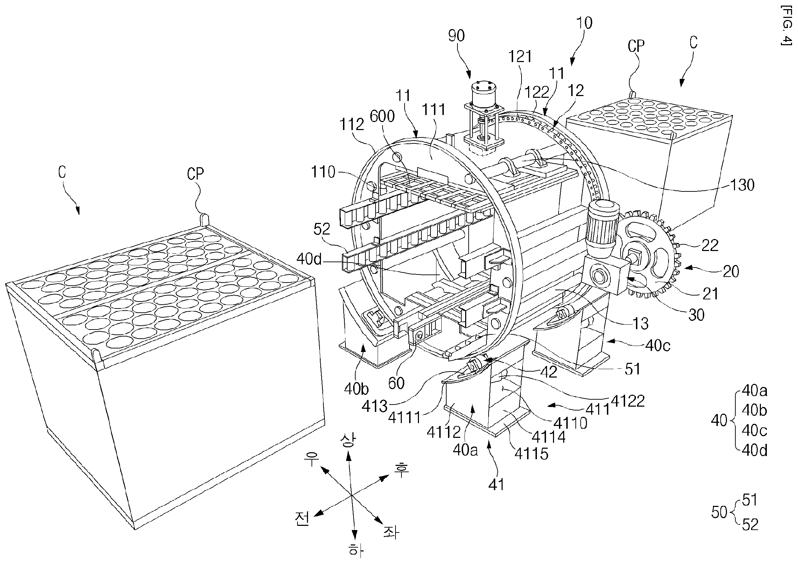

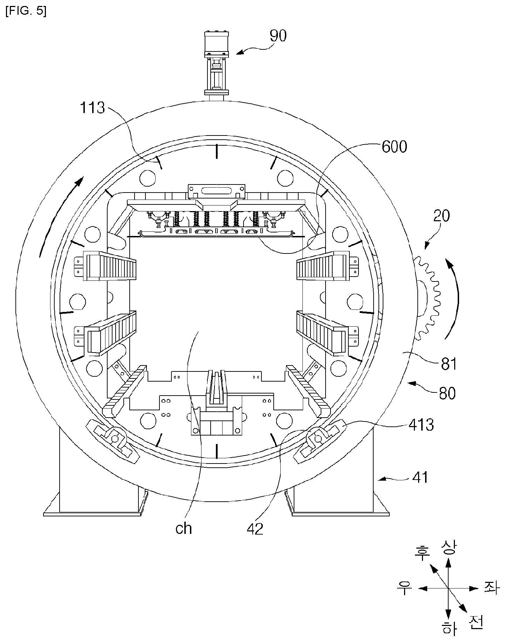

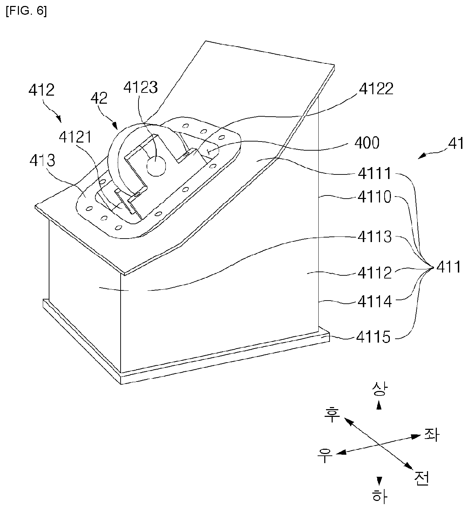

FIG. 4 is a perspective view illustrating a carriage handling module, from which a module housing 80 is removed, and a carriage C, according to an embodiment of the present disclosure. FIG. 5 is a view illustrating a carriage handling module, from which a rotation housing 82 is removed, according to an embodiment of the present disclosure, when viewed from a front side. FIG. 6 is a perspective view illustrating a support unit according to an embodiment of the present disclosure.

Referring to FIGS. 4 to 6, a carriage handling module according to an embodiment of the present disclosure includes a rotation frame 10, a wheel rotation part 20, and a support part 40.

The rotation frame 10 is a frame having a rotation space, that is a space, into which the carriage C enters, in an interior thereof. An outer appearance of the rotation frame 10 may be formed in a cylindrical shape, however, an entirety thereof does not need to have a cylindrical shape. For example, the rotation frame 10 may include a plurality of bodies 11 that are disposed to be spaced apart from each other along the forward/rearward direction, while having, at a center thereof, a chamber Ch through which the carriage C passes, and a plurality of connection ribs 13 that connect the plurality of bodies 11 along the forward/rearward direction, and thus, may have a shape, such as a cylindrical frame.

The rotation frame 10 may include a body 11 that is opened along the forward/rearward direction, and may include a wheel part 12 that is disposed along a circumference of the body 11 when viewed along the forward/rearward direction. The body 11 may have a disk-shaped plate body 111 that is perpendicular to the forward/rearward direction, and a ring-shaped frame contact member 112 that forms an outer boundary of the plate body 111, and may include a reinforcing rib that reinforces a strength of the rotation frame 10 by connecting the frame contact member 112 and the plate body 111. The frame contact member 112 may have a shape that protrudes from a circumference of the body 11 along any one direction of the forward/rearward direction, like a plate, which is perpendicular to a radial direction of the body 11, is bent to form a ring. Referring to the drawings, the frame contact member 112 may protrude outward from the body 11 with respect to the forward/rearward direction.

With respect to the forward/rearward direction, the wheel part 12 may be coupled to an inner side of the body 11. The wheel part 12 may be directly coupled to the inner side of the body 11, or may be coupled to the body 11 through the connection rib 13. Accordingly, the carriage C may also pass through a center of the wheel part 12.

The wheel part 12 may include an annular wheel frame 121. A pair of annular wheel frames 121 may be provided. The wheel part 12 may include a plurality of pins 122 that are disposed to be spaced apart from each other along a circumferential direction of the wheel frame 121, and are coupled to the wheel frame 121. The plurality of pins 122 may be disposed between a pair of wheel frames 121, and opposite ends thereof may be coupled to the wheel frames 121, respectively.

Because the wheel frame 121 may be formed in a toroidal shape, the wheel frames 121 may be disposed to be spaced apart from each other along a circumferential direction of the wheel frame 121. The plurality of pins 122 may be rotatably coupled to the wheel frame 121. The pin 122 may be coupled to the wheel frame 121 to be rotatable, while the forward/rearward direction is taken as an axial direction thereof. That is, the wheel part 12 may be formed in a pin wheel type including a plurality of spaced-apart pins 122, so that excessively strong force applied to the pins 122 by the wheel rotation part 20 may be prevented, thereby preventing damage or wear of the pins 122 and the wheel rotation part 20.

A carriage handling module according to an embodiment of the present disclosure may include a driving part 30 that is configured to rotate the wheel rotation part 20 to rotate the rotation frame 10. The driving part 30 may be accommodated in the rotation housing 82 of the module housing 80, together with the wheel rotation part 20. The driving part 30 may be a device, such as a motor or an actuator, that receives power to generate a rotational force, however, a type thereof is not limited thereto.

A carriage handling system 1 according to an embodiment of the present disclosure may include a transfer part 60. The transfer parts 60 of the respective modules may be disposed to be spaced apart from each other along the forward/rearward direction. The transfer part 60 may be configured as a conveyor belt that is disposed, along the forward/rearward direction, at a lower portion of an inner side of the module housing 80, and that may transfer the carriage C, which is seated thereon, along the forward/rearward direction. However, another configuration, other than a conveyor belt, may also be used as the transfer part 60, as long as it is a device that is capable of moving a seated target. The transfer part 60 may be disposed adjacent to an opening of the body 11, and may be coupled to the rotation frame 10, so that the carriage C is transferred along the forward/rearward direction.

A transfer assisting roller 50 may be rotatably coupled to an inner side of the body 11. Because the transfer part 60 may be disposed adjacent to the opening of the body 11, the transfer assisting roller 50 may assist transfer of the carriage C by the transfer part 60. A plurality of transfer assisting rollers 50 may be disposed to be freely rotatable. The transfer assisting roller 50 may be disposed on at least one of an upper side, a lower side, a left side, and a right side of an opening of the disk-shaped member. As illustrated, the transfer assisting roller 50 may include a lower assisting roller 51 that is located on a lower side of the opening, and side assisting rollers 52 that are located on left and right sides of the opening, but the number and an arrangement thereof are not limited thereto.

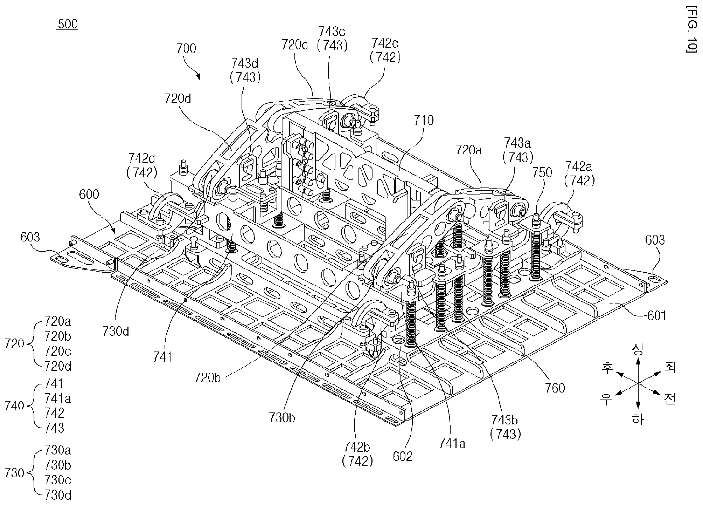

A carriage handling module of a carriage handling system 1 according to an embodiment of the present disclosure may include a carriage fixing apparatus 500 (see FIG. 10). The carriage fixing apparatus 500 may fix the carriage C, or may release fixing of the carriage C by the guide pusher assembly 90.

More specifically, the carriage fixing apparatus 500 may fix the carriage protrusion CP of the carriage C by using a fixing member 600, or may release fixing of the carriage protrusion CP by lifting the fixing member 600.

The carriage fixing apparatus 500 is provided to fix the carriage C that has entered an interior of the rotation frame 10. The wheel rotation part 20 and the rotation frame 10 are configured to rotate the carriage C that is fixed by the carriage fixing apparatus 500 relative to the module housing 80 while a first direction that is a rearward direction of the forward/rearward direction is taken as an axis thereof. That is, a direction, in which the carriage C progresses in the carriage handling system 1, and an axial direction, about which the carriage C is rotated by the wheel rotation part 20, may coincide. During rotation by the wheel rotation part 20, the carriage fixing apparatus 500 serves to fix the carriage C to the rotation frame 10, so that deviation of the carriage C or deviation of products in the carriage C does not occur.

The carriage fixing apparatus 500 may include a fixing member 600 that is configured to fix the carriage C. The fixing member 600 may be selectively placed in any one of a fixing state and a releasing state. In the fixing state, the fixing member 600 is deformed by a fixed driving part, and is moved toward the carriage C that has entered an interior of the module housing 80, so as to fix the carriage protrusion CP of the carriage C, thereby fixing the carriage C between the fixing member 600 and the rotation frame 10. In the releasing state, the fixing member 600 deviates from the carriage protrusion CP of the carriage C, so that the carriage C may be moved along the forward/rearward direction and may deviate from the rotation frame 10.

The guide pusher assembly 90 is provided to change a state of the fixing member 600. That is, by an operation of the guide pusher assembly 90, the fixing member 600 may be changed from the fixing state to the releasing state.

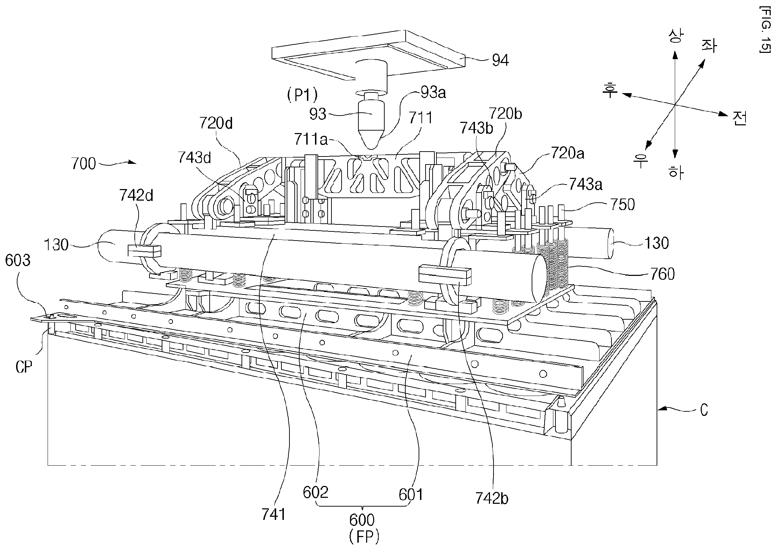

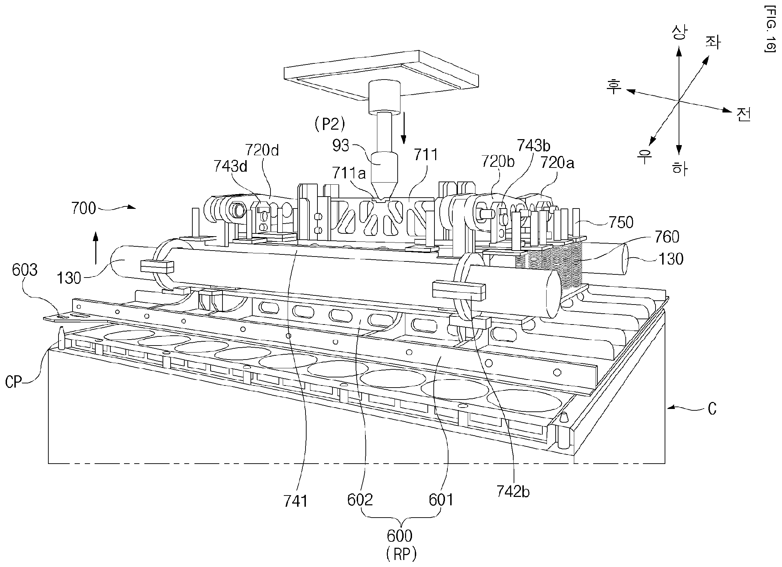

A carriage fixing apparatus 500 according to an embodiment of the present disclosure may include a fixing member 600 and a link assembly 700. Specifically, the carriage fixing apparatus 500 may have, as the link assembly 700, at least one of a four-bar link, a toggle link, or a combination thereof. The fixing member 600 is a plate for fixing the carriage protrusion CP of the carriage C, and is lowered by operation of the link assembly 700 at a fixing position FP (see FIG. 15) to fix the carriage protrusion CP, and is lifted by operation of the link assembly 700 at a releasing position RP (see FIG. 16) to deviate from the carriage protrusion CP, thereby releasing fixing of the carriage C. That is, a state of the link assembly 700 may be changed by an operation of the guide pusher assembly 90. The fixing member 600 may press the carriage C against the rotation frame 10. When the carriage protrusion CP is fixed to the fixing member 600 while the carriage C is seated on an inner surface of the rotation frame 10, the carriage C may be clamped and fixed between the fixing member 600 and the inner surface of the rotation frame 10.

A link operating member included in the fixed driving part may be an air cylinder that is capable of vertical movement, however, any device that is capable of pressing the link assembly 700 through lifting and lowering may be used as the link operating member.

The support part 40 includes support units 40a, 40b, 40c, and 40d that are configured to support the rotation frame 10. A plurality of support units 40a, 40b, 40c, and 40d may be provided. The plurality of support units 40a, 40b, 40c, and 40d may be disposed to be spaced apart from each other along the forward/rearward direction or the leftward/rightward direction. In the drawings, because the support units 40a, 40b, 40c, and 40d may include a first support unit 40a, a second support unit 40b, a third support unit 40c, and a fourth support unit 40d, so that a total of four support units are disposed to be spaced apart from each other along the forward/rearward direction or the leftward/rightward direction and are disposed at respective vertices of a rectangle, and two of the support units 40a, 40b, 40c, and 40d support each of a pair of bodies 11 that are spaced apart from each other along the forward/rearward direction, however, the number and an arrangement thereof are not limited thereto.

Each of the support units 40a, 40b, 40c, and 40d includes a base part 41 and a support roller part 42. The base part 41 is a part that supports the rotation frame 10 while contacting the ground. The support roller part 42 may be rotatably coupled to the base part 41 while the forward/rearward direction is taken as an axial direction thereof, and supports the rotation frame 10, which is rotated while the forward/rearward direction is taken as an axial direction, from a lower side. The support roller part 42 may contact the frame contact member 112 of the rotation frame 10, and may support rotation of the rotation frame 10. When the rotation frame 10 is rotated, the support roller part 42 may also be rotated. The support roller parts 42 of the plurality of support units 40a, 40b, 40c, and 40d support the rotation frame 10 at different positions, so that, even when a pressure change occurs greatly in an interior of the module housing 80, causing a position of the rotation frame 10 to change and a rotation center thereof to be shifted, rotation of the rotation frame 10 may be smoothly supported.

The base part 41 may include a base housing 411 and a roller platform 412. The base housing 411 includes a support plate 4111 having a roller opening 400, through which the support roller part 42 and the roller platform 412 pass when the roller platform 412 is rotated, and base-side plate bodies 4112, 4113, and 4114 that extend downward from the support plate 4111. The support plate 4111 may contact the module housing 80. The roller platform 412 and the support roller part 42 may pass through an opening formed in the module housing 80 to support the rotation frame 10, and the base housing 411 may contact the module housing 80 while surrounding the opening. That is, the module housing 80 and the base housing 411 may form a housing of the carriage handling module as an overall pressure vessel. Because an outer surface of the module housing 80 may be formed in a cylindrical shape, the support plate 4111 may also be formed in a curved shape.

The base-side plate bodies 4112, 4113, and 4114 may include an access opening 4110. The access opening 4110 is an opening through which the support roller part 42 and the roller opening 400 may be identified from an outside. The access opening 4110 may be formed to be surrounded by the support plate 4111 and the base-side plate bodies 4112, 4113, and 4114.

The base-side plate bodies 4112, 4113, and 4114 may include a pair of front/rear side plates 4112 that are perpendicular to the forward/rearward direction and are spaced apart from each other in the forward/rearward direction, an inner plate 4113 that is perpendicular to the leftward/rightward direction and is coupled to an inner side of the front/rear side plates 4112 in the leftward/rightward direction, and an outer plate 4114 that is perpendicular to the leftward/rightward direction and is coupled to an outer side of the front/rear side plates 4112 in the leftward/rightward direction. The access opening 4110 may be defined as being surrounded by the outer plate 4114, the front/rear side plates 4112, and the support plate 4111. That is, the access opening 4110 may be formed on an outer side of the base housing 411 in the leftward/rightward direction, so that access by an operator from the outside may be enabled. The base housing 411 may include a lower plate 4115 that is coupled to a lower side of the base-side plate bodies 4112, 4113, and 4114.

The roller platform 412 is a portion, to which the support roller part 42 is rotatably coupled. The roller platform 412 may be rotatably coupled to the base housing 411 so that the support roller part 42 is exposed to an outside of the base housing 411 and an interior of the module housing 80 to contact the rotation frame 10, or is moved to an interior of the base housing 411 to deviate from the rotation frame 10. The roller platform 412 may allow the support roller part 42 to be rotated to support the rotation frame 10 while covering an opening formed in the module housing 80, or may allow the support roller part 42 to deviate from the rotation frame 10 while opening the opening. The roller platform 412 may be separably coupled to the base housing 411. The roller platform 412 may be rotatably coupled to the base housing 411, while the forward/rearward direction is taken as an axial direction thereof.

As the roller platform 412 is rotated, an operator may easily access the support roller part 42 through the access opening 4110 to perform an operation, without disassembling the entire carriage handling module. Because the roller platform 412 is separably coupled to the base housing 411, an operator may withdraw the roller platform 412 through the access opening 4110 to replace or service the roller platform 412 depending on a situation.

As illustrated, when the roller platform 412 causes the support roller part 42 to deviate from the rotation frame 10, the roller platform 412 may be positioned in a state that is perpendicular to an upward/downward direction. Furthermore, when the roller platform 412 causes the support roller part 42 to contact the rotation frame 10, the roller platform 412 may be positioned in a state, in which it is perpendicular to a radial direction of the rotation frame 10.

More specifically, the roller platform 412 may include a platform base 4121, a roller connecting leg 4122 that is coupled to an upper surface of the platform base 4121, and a shaft 4123 that rotatably couples the roller connecting leg 4122 and the support roller part 42.

A pair of roller connecting legs 4122 may be provided to be spaced apart from each other in the forward/rearward direction, and may support the support roller part 42 on opposite sides in the forward/rearward direction. The shaft 4123 may pass through the support roller part 42 in the forward/rearward direction, and may be coupled to the pair of roller connecting legs 4122. The support roller part 42 may be rotatably coupled to the shaft 4123, but the support roller part 42 and the shaft 4123 may also be rotatably coupled together to the roller connecting legs 4122. The roller connecting leg 4122 may have a slit that is connected to a portion, to which the shaft 4123 is coupled, so as to facilitate insertion of the shaft 4123.

The base part 41 may include a circumferential member 413. The circumferential member 413 may be inserted into the roller opening 400, and may be inserted into an opening that is formed in the module housing 80. The circumferential member 413 may be formed in an annular shape such that the support roller part 42 passes through an opening in an interior thereof. The roller platform 412 may contact a lower surface of the circumferential member 413. That is, the circumferential member 413 is inserted into the opening formed in the module housing 80, and the roller platform 412 covers the opening of the circumferential member 413 like a cover, so that an airtightness of the module housing 80 may be maintained.

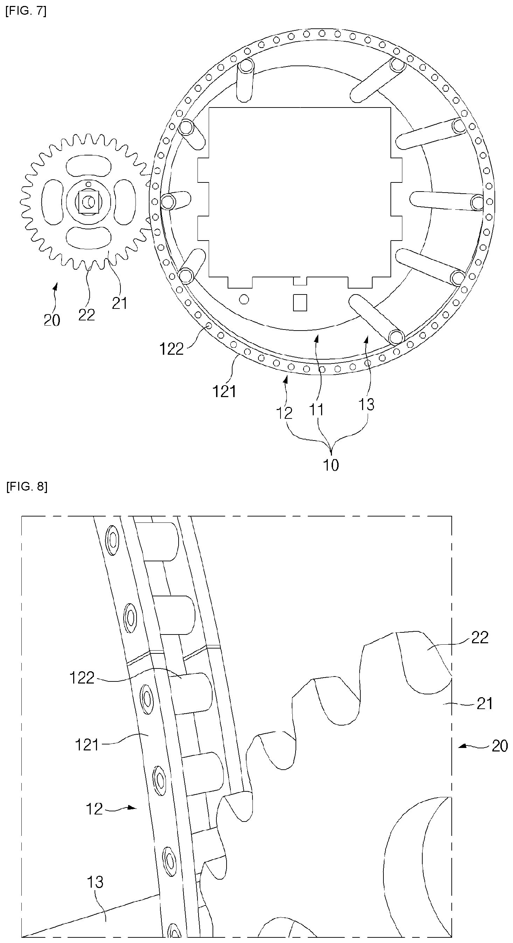

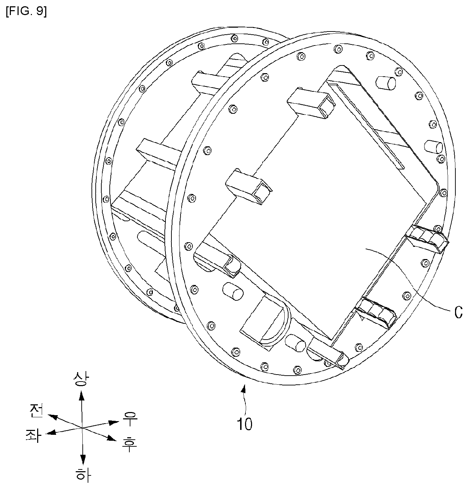

FIG. 7 illustrates a rotation frame 10 and a wheel rotation part 20 according to an embodiment of the present disclosure. FIG. 8 illustrates, in detail, a state, in which the support frame 10 and the wheel rotation part 20 are engaged with each other, according to an embodiment of the present disclosure. FIG. 9 is a perspective view illustrating a situation, in which a carriage is rotated while being fixed by a carriage fixing apparatus according to an embodiment of the present disclosure.

Referring to FIGS. 7 to 9, the wheel rotation part 20 is engaged with the wheel part 12. The wheel rotation part 20 is configured to rotate the wheel part 12. The wheel rotation part 20 may include a sprocket that is enmeshed with a plurality of pins 122 to rotate the wheel part 12 as it is rotated. The sprocket may include a sprocket body 21 that is rotated while the forward/rearward direction is taken as an axial direction thereof, and a plurality of gear teeth 22 that are formed along a circumference of the sprocket body 21.

The wheel rotation part 20 and the wheel part 12 may be engaged with each other such that the plurality of gear teeth 22 are inserted between the plurality of pins 122, respectively. With this structure, the rotation frame 10 may be rotated by the wheel rotation part 20 while the forward/rearward direction is taken as an axial direction thereof.

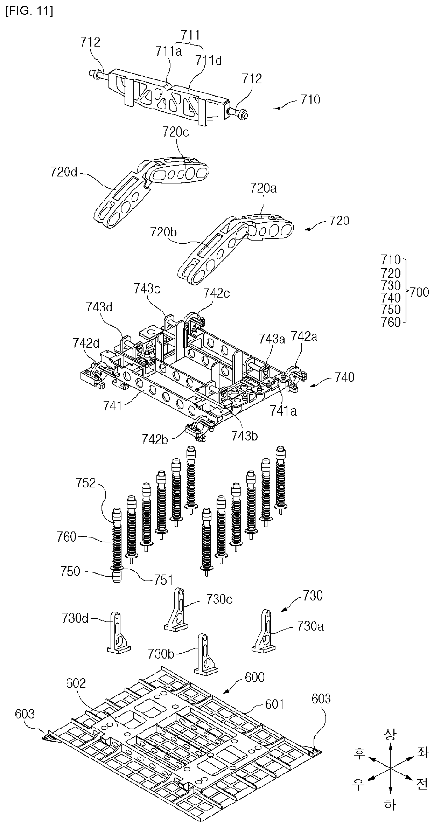

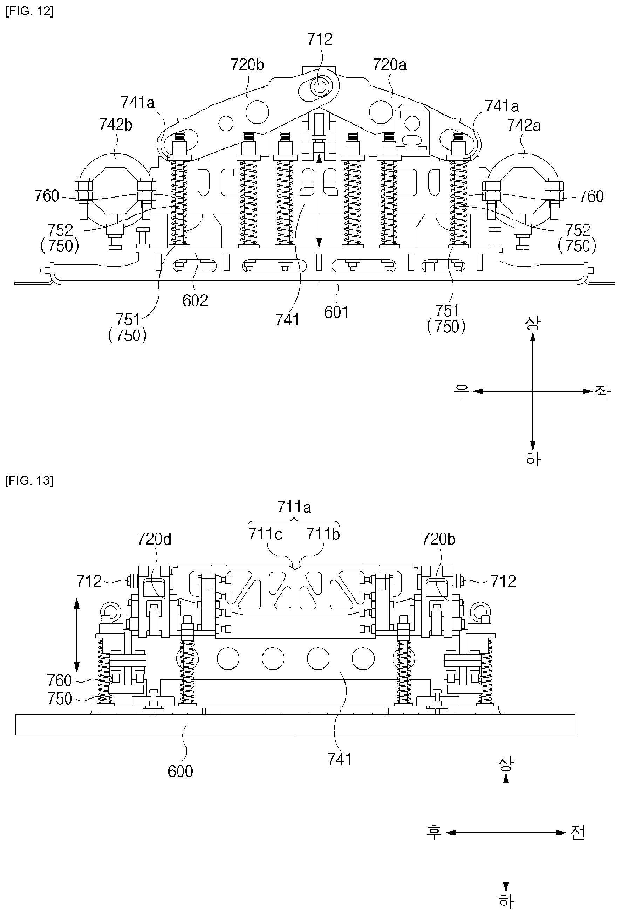

FIG. 10 illustrates a perspective view of a carriage fixing apparatus 500 according to an embodiment of the present disclosure. FIG. 11 is an exploded perspective view illustrating a carriage fixing apparatus 500 according to an embodiment of the present disclosure. FIG. 12 illustrates a front view of a carriage fixing apparatus 500 according to an embodiment of the present disclosure. FIG. 13 illustrates a side view of a carriage fixing apparatus 500 according to an embodiment of the present disclosure.

Referring to FIGS. 10 to 13, the carriage fixing apparatus 500 may include a link assembly 700, and a fixing member 600 that is coupled to a lower portion of the link assembly 700. As described above, the fixing member 600 is a member for fixing a carriage C that is disposed on a lower side, and although the fixing member 600 is illustrated in a form of a frame in the drawings, the present disclosure is not limited thereto.

The fixing member 600 may be moved in an upward/downward direction between a fixing position FP (see FIG. 15) for fixing the carriage C by pressing it, and a releasing position RP (see FIG. 16) that is spaced apart upward from the carriage C to release fixing of a position of the carriage C.

The fixing member 600 may be moved downward (a second direction) from the releasing position RP to the fixing position FP. The fixing member 600 may be moved upward (a third direction opposite to the second direction) from the fixing position FP to the releasing position RP by the link assembly 700.

The link assembly 700 may be pressed by the guide pusher 93 to be coupled to the fixing member 600 to lift the fixing member 600 at the fixing position FP to the releasing position RP.

The link assembly 700 may include a horizontal link member 710 that extends rearward (the first direction) to be pressed by the guide pusher 93, rotation link members 720 that are coupled to opposite sides of the horizontal link member 710 in the first direction, respectively, and a lift member 730 that is coupled to the rotation link members 720 to lift the fixing member 600.

More specifically, the lift member 730 may include first to fourth lift members 730a to 730d that are provided two each in the leftward/rightward direction of the horizontal link member 710, respectively. The first lift member 730a and the second lift member 730b may be disposed at positions that are symmetrical to each other with respect to the horizontal link member 710, and the third lift member 730c and the fourth lift member 730d may be disposed at positions that are symmetrical to each other with respect to the horizontal link member 710. The first lift member 730a to the fourth lift member 730d may be respectively coupled to four positions of the fixing member 600, which has a relatively large extent, and may extend upward to lift the fixing member 600 more stably.

The rotation link member 720 may connect the horizontal link member 710 and each lift member 730 to lift each lift member 730 in response to a downward movement of the horizontal link member 710. For this purpose, the rotation link member 720 may include first to fourth rotation link members 720a to 720d.

The first rotation link member 720a and the second rotation link member 720b, which are coupled to a front end of the horizontal link member 710, may connect the horizontal link member 710 with the first lift member 730a and the second lift member 730b, respectively.

The third rotation link member 720c and the fourth rotation link member 720d, which are coupled to a rear end of the horizontal link member 710, may connect the horizontal link member 710 with the third lift member 730c and the fourth lift member 730d, respectively.

Each of the first rotation link member 720a to the fourth rotation link member 720d may include a one-side part that is coupled to the horizontal link member 710, and an opposite-side part that is coupled to each lift member 730. The one-side part of each of the first to fourth rotation link members 720a to 720d may be moved downward as the horizontal link member 710 is moved downward by a guide pusher 93, which will be described below, and the opposite-side part thereof may be moved upward to lift each lift member 730.

More specifically, when a rear side is viewed from a front side, the horizontal link member 710 may be pressed by the guide pusher 93, and the first rotation link member 720a and the third rotation link member 720c may be rotated counterclockwise, and the second rotation link member 720b and the fourth rotation link member 720d may be rotated clockwise.

A configuration capable of fixing the rotation link member 720 may be needed so that the opposite-side part of the rotation link member 720 is rotated by the one-side part thereof. Accordingly, the link assembly 700 may include a fixing bracket 743 that is coupled to the rotation link member 720 to fix the rotation link member 720 between the one-side part and the opposite-side part of each rotation link member 720.

The fixing bracket 743 may include a first fixing bracket 743a, a second fixing bracket 743b, a third fixing bracket 743c, and a fourth fixing bracket 743d to fix each rotation link member 720. Each fixing bracket 743 may be rotatably coupled to each rotation link member 720.

A structure, in which the first to fourth lift members 730 extend upward, may include a support frame 740 that is configured such that the first to fourth lift members 730 pass therethrough, and is configured to support the fixing member 600.

The support frame 740 may include a frame body 741 that is spaced upward apart from the fixing member 600 and extends in parallel to the fixing member 600, and a support part 741a that extends from the frame body 741 and is spaced upward apart from the fixing member 600.

The support frame 740 may be supported by a support member 130 that extends in the forward/rearward direction in an interior of the rotation frame 10, such that the carriage fixing apparatus 500 is supported by the rotation frame 10 (see FIG. 4). The support member 130 may be provided one at each of leftward and rightward sides of the support frame 740, and the support frame 740 may include grippers 742, which are provided two each at leftward and rightward sides of the frame body 741, to more stably support the support member 130, so that the carriage fixing apparatus 500 is stably supported.

The gripper 742 may include a first gripper 742a that is provided adjacent to the first lift member 730a, a second gripper 742b that is provided adjacent to the second lift member 730b, a third gripper 742c that is provided adjacent to the third lift member 730c, and a fourth gripper 742d that is provided adjacent to the fourth lift member 730d.

The first gripper 742a and the third gripper 742c may be spaced apart from each other in the forward/rearward direction to together grip one support member, and the second gripper 742b and the fourth gripper 742d may be spaced apart from each other in the forward/rearward direction to together grip one support member.

The support frame 740 may include fixing brackets 743 that are coupled to the frame body 741, respectively. However, the fixing bracket 743 may be integrally formed with the frame body 741.

The horizontal link member 710 may include a horizontal link body 711 that extends in the first direction (rearward), and a rotation support frame 712 that is coupled to pass through the horizontal link body 711 in the first direction.

The rotation support member 712 may protrude from the horizontal link body 711 toward opposite sides in the forward/rearward direction, and may be configured to couple the first rotation link member 720a to the fourth rotation link member 720d.

The horizontal link body 711 may include an upper surface 711d, and a pusher groove 711a into which the guide pusher 93 is inserted. The pusher groove 711a may be formed in a shape that is concave from the upper surface 711d. The horizontal link body 711 may include a first inclined surface 711b and a second inclined surface 711c, which form the pusher groove 711a and are formed to approach each other toward a lower side (the second direction) from the upper surface 711d.

The support part 741a, which extends from the frame body 741, may be a part that is formed to support the fixing member 600. More specifically, the fixing member 600 may include a pressing part 601 that is configured to press the carriage C, and a coupling part 602 that is disposed above the pressing part 601 and is for being coupled to the lift member 730.

The fixing member 600 may also include a fixing hole 603 that is provided in the pressing part 601 to be coupled to the carriage C. The fixing hole 603 may be configured such that the carriage protrusion CP of the carriage C is inserted thereinto. The fixing hole 603 may be respectively provided at two diagonal corners of the pressing part 601, which has a substantially quadrangular shape, but the present disclosure is not limited thereto.

The coupling part 602 may be coupled not only to the lift member 730, but also to a coupling member 750 that is coupled to the fixing member 600 and the support frame 740, such that the fixing member 600 is supported by the support frame 740.

The fixing member 600 may be lifted by the lift member 730 from the fixing position FP to the releasing position RP, but, conversely, the fixing member 600 needs to be moved back from the releasing position RP to the fixing position FP to fix the carriage C.

For this purpose, the coupling part 602 of the fixing member 600 and the support part 741a, which is spaced upward from the fixing member 600, may be coupled to each other through a coupling member 750, and an elastic member 760 may be provided along the coupling member 750 that extends in the third direction (upward).

The coupling member 750 may include a flange part 751 that is disposed to be coupled to an upper surface of the coupling part 602, and a cylinder part 752 that extends from the flange part 751 in the third direction and is provided in a cylindrical shape. The coupling member 750 may be stably coupled to the frame body 741 and the coupling part 602 through nuts that are coupled to opposite ends of the cylinder part 752.

The elastic member 760 may be provided along an outer surface of the cylinder part 752 of the coupling member 750. The elastic member 760 may be disposed between the flange part 751 and the support part 741a to adjust a spacing distance between the support frame 740 and the fixing member 600 in the upward/downward direction. The elastic member 760 may be configured to move the fixing member 600 from the releasing position RP to the fixing position FP.

That is, in the fixing member 600, the releasing position RP is located on an upper side of the fixing position FP, and when the fixing member 600 is moved to the releasing position RP by the guide pusher 93 and then needs to be moved back to the fixing position FP to fix the carriage C, the guide pusher 93 may be spaced apart from the horizontal link member 710. Even in this case, the horizontal link member 710 may not be moved back upward (the third direction) by its own weight, but the elastic member 760, which is provided in a coil spring shape between the support part 741a and the coupling part 602, may apply an elastic force, so that the flange part 751 pushes the fixing member 600 back downward (the second direction). In this case, the lift member 730, which is coupled to the fixing member 600, may be moved again downward (the second direction), and the rotation link member 720 and the horizontal link member 710 may also return to their original positions.

With this structure, the support frame 740 may be fixed in position by the support member 130 in an interior of the rotation frame 10, and the horizontal link member 710, the rotation link member 720, the lift member 730, and the fixing member 600 may be moved relatively with respect to the support frame 740 by the guide pusher 93 and the elastic member 760.

In this way, when the guide pusher 93 is moved to the horizontal link member 710, the fixing member 600 may be lifted from the fixing position FP to the releasing position RP, and when the guide pusher 93 is separated from the horizontal link member 710, the fixing member 600 may return from the releasing position RP to the fixing position FP. That is, by using the elastic member 760, bidirectional movement of the fixing member 600 may be enabled with only one operation of the guide pusher 93, so that usability may be improved.

Furthermore, the carriage C is rotated in an interior of the rotation frame 10 while being fixed, and because an operation of the guide pusher 93 is required only when the carriage fixing apparatus 500 releases the carriage C, and no separate driving power is required when the carriage C is fixed, the carriage C may be rotated more stably in an interior of the carriage handling module. As a result, usability and durability of the carriage handling module may be improved, and a processing speed of the carriage C may be increased.

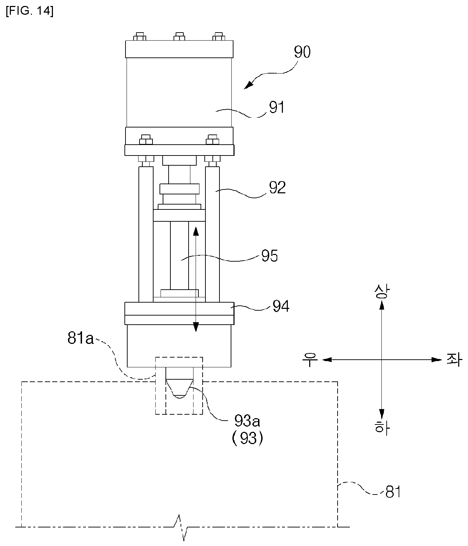

FIG. 14 illustrates a schematic view of a guide pusher assembly 90 being mounted on the main housing 81 according to an embodiment of the present disclosure.

Referring to FIG. 14, the guide pusher assembly 90 may include a guide pusher 93 that is moved downward (the second direction) toward the horizontal link member 710 (see FIG. 10), or is moved upward (the third direction) to be spaced apart from the horizontal link member 710.

The guide pusher 93 may be moved in the second direction or the third direction, which are perpendicular to the first direction (rearward), which is a direction into which the carriage C is inserted. To move the guide pusher 93, the guide pusher assembly 90 may include a push rod 95 that is connected to the guide pusher 93, and an actuator 91 for moving the push rod 95.

The guide pusher assembly 90 may include a guide rod 92 to stably guide movement of the push rod 95, which is moved in the second direction or the third direction, and a pusher support part 94 to stably support the guide pusher 93. The guide rod 92 may be configured to guide extension or retraction movement. The guide rod 92 may include one end that is coupled to the actuator 91, and an opposite end that is coupled to the pusher support part 94 to support the guide pusher 93.

The guide pusher 93 and the push rod 95 may be introduced into an interior of the main housing 81, or may be withdrawn to an exterior of the main housing 81, through a pusher space in a pusher introduction part 81a that is installed in the main housing 81.

The guide pusher 93 may include a pressing surface 93a that is formed to be inserted into the pusher groove 711a in correspondence with the first inclined surface 711b and the second inclined surface 711c. The pressing surface 93a may extend along a circumferential direction while the upward/downward direction is taken as an axis thereof. The pressing surface 93a is not limited thereto, and may have a tapered shape.

The numbers of the rotation link members 720, the lift members 730, the grippers 742, the fixing brackets 743, and the like described above are not limited to those illustrated in the drawings.

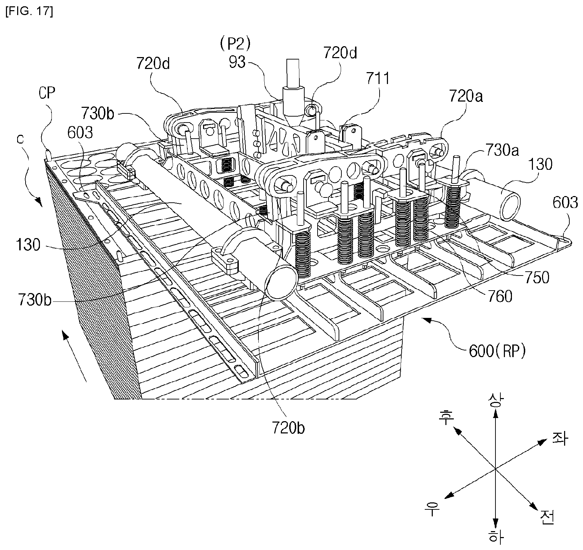

FIG. 15 illustrates a schematic view of a state, in which the fixing member 600 of the carriage fixing apparatus 500 according to an embodiment of the present disclosure fixes the carriage C when the fixing member 600 is in the fixing position FP. FIG. 16 illustrates a schematic view of the carriage fixing apparatus 500 according to an embodiment of the present disclosure, which is spaced apart from the carriage C when the fixing member 600 is in the releasing position RP. FIG. 17 illustrates a schematic view of a state, in which the carriage C is moved when the fixing member 600 of the carriage fixing apparatus 500 according to an embodiment of the present disclosure is in the releasing position RP.

Referring to FIGS. 15 to 17, when the carriage C is inserted into the chamber Ch (see FIG. 5), the carriage protrusion CP may be inserted into the fixing hole 603 of the fixing member 600 that is in the fixing position FP, such that the carriage C is fixed in the chamber Ch. When the carriage protrusion CP is inserted into the fixing hole 603, the carriage C may be clamped between the rotation frame 10 and the carriage fixing apparatus 500, which is provided to fix the carriage C.

In this case, the fixing member 600 is in the fixing position FP, so that the pressing part 601 may press an upper surface of the carriage C, and the guide pusher 93 may be in a first position P1, in which the guide pusher 93 is spaced upward apart from the horizontal link body 711.

When the rotation frame 10 is rotated while the carriage C is fixed to move the carriage C to a next processing module, it is necessary to release fixing of the carriage C.

When the guide pusher 93 is moved downward (the second direction) from the pusher support part 94 to press the horizontal link body 711, the guide pusher 93 may be in a second position P2. In this case, according to the principle described above, the horizontal link body 711 is moved downward, so that the lift member 730 (see FIG. 10) lifts the coupling part 602 of the fixing member 600, whereby the fixing member 600 may be lifted upward (the third direction) from the fixing position FP and moved to the releasing position RP.

With this structure, the carriage protrusion CP may be withdrawn from the fixing hole 603, so that fixing of the carriage C may be released. That is, the fixing member 600 may be spaced upward (the third direction) apart from the carriage C, so that fixing of the carriage C may be released.

Thereafter, the carriage C may be moved rearward (the first direction) by the transfer part 60 (see FIG. 4).

The above description is merely an example of the technical idea of the present disclosure, and various modifications and variations may be made by one skilled in the art without departing from the essential characteristic of the present disclosure. Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

## Claims

1. A carriage fixing apparatus comprising:
a fixing member configured to be moved between a fixing position for fixing a carriage and a releasing position for being spaced apart from the carriage; and
a link assembly coupled to the fixing member to be pressed by a guide pusher to lift the fixing member at the fixing position to the releasing position in a direction.

2. The carriage fixing apparatus of claim 1, wherein the link assembly includes:
a horizontal link member configured to be pressed by the guide pusher;
a lift member coupled to the fixing member and extending in the direction; and
a rotation link member rotated by the horizontal link member and connecting the lift member and the link member to lift the lift member.

3. The carriage fixing apparatus of claim 2, wherein the link assembly further includes:
a fixing bracket, to which the rotation link member is rotatably coupled by fixing a point between a one-side part coupled to the horizontal link member and an opposite-side part coupled to the lift member.

4. The carriage fixing apparatus of claim 1, wherein the link assembly includes:
a support frame having a support part spaced apart from the fixing member in the direction; and
a coupling member extending from the fixing member in the direction and coupled to the support part and the fixing member.

5. The carriage fixing apparatus of claim 4, wherein the coupling member includes:
a flange part disposed on an upper surface of the fixing member to push out the fixing member; and
a cylinder part extending from the flange part in the direction, and
wherein the link assembly further includes:
an elastic member provided between the flange part and the support part along the cylinder part to move the fixing member from the releasing position to the fixing position.

6. The carriage fixing apparatus of claim 1, wherein the fixing member includes:
a fixing hole for coupling to the carriage.

7. The carriage fixing apparatus of claim 3, wherein the link assembly further includes:
a support frame configured to support the fixing member and coupled to the fixing bracket.

8. A carriage handling module comprising:
a rotation frame including a body having a chamber, through which a carriage passes along a first direction, and a wheel part disposed along a circumference of the body when viewed along the first direction;
a wheel rotation part engaged with the wheel part to rotate the wheel part;
a guide pusher configured to be moved in a second direction perpendicular to the first direction; and
a carriage fixing apparatus including a fixing member configured to fix the carriage between the fixing member and the rotation frame in the chamber and configured to be moved in a third direction opposite to the second direction by the guide pusher, and mounted on the rotation frame.

9. The carriage handling module of claim 8, wherein the fixing member is moved between the fixing position for fixing the carriage and a releasing position for being spaced apart from the carriage.

10. The carriage handling module of claim 8, wherein the carriage fixing apparatus further includes:
a link assembly including a horizontal link member configured to be pressed by the guide pusher, a lift member coupled to the fixing member and extending in the third direction, and a rotation link member rotated by the horizontal link member and connecting the lift member and the link member to lift the lift member in the third direction.

11. The carriage handling module of claim 10, wherein the horizontal link member includes:
an upper surface; and
a first inclined surface and a second inclined surface defining a pusher groove for insertion of the guide pusher and configured to become closer as they go from the upper surface toward the second direction.

12. The carriage handling module of claim 11, wherein the guide pusher includes:
a pressing surface configured to correspond to the first inclined surface and the second inclined surface to press the first inclined surface and the second inclined surface.

13. The carriage handling module of claim 8, wherein the carriage fixing apparatus further includes:
a support frame supported by the support member extending in the first direction to be coupled to the rotation frame and configured to support the fixing member.

14. The carriage handling module of claim 13, wherein the support frame includes:
a gripper configured to grip the support member.

15. The carriage handling module of claim 8, further comprising:
a push rod connected to the guide pusher; and
an actuator connected to the push rod to move the push rod in the second direction or in the third direction.
